# EUROPEAN PATENT SPECIFICATION

(11) **EP 2 080 341 B1**
(45) Date of publication and mention of the grant of the patent: **22.06.2011**
(21) Application number: 08839365.7
(22) Date of filing: 08.10.2008
(51) Int. Cl.: H04L 29/06, H04L 12/58, H04L 1/00

(54) **Graceful degradation for voice communication services over wired and wireless networks**
Progressive Verminderung für vokale Kommunikationsdienste über drahtgebundene und drahtlose Netze
Dégradation progressive pour des services de communication vocale sur des réseaux câblés et sans fil

(30) Priority: 19.10.2007 US 999619 P; 08.02.2008 US 28400; 15.08.2008 US 192890; 15.08.2008 US 89417
(43) Date of publication of application: 22.07.2009
(73) Proprietor: Voxer IP LLC, San Francisco CA 94107 (US)
(72) Inventor: KATIS, Thomas E., Jackson Wyoming 83001-9475 (US); PANTTAJA, James T., Healdsburg California 95448 (US); PANTTAJA, Mary G., Healdsburg California 95448 (US); RANNEY, Matthew J., Oakland California 94610 (US)
(74) Representative: Alton, Andrew
(86) International application number: PCT/US2008/079227
(87) International publication number: WO 2009/052000

(56) References cited:
- EP-A- 1 725 060
- WO-A-2006/114673
- US-A1- 2005 144 247

## Description

### BACKGROUND

### Field of the Invention.

This invention relates to voice communication, and more particularly, to the graceful degradation of voice communication services when network conditions prevent live or real-time communication.

### Description of Related Art

Current wireless voice communications, such as mobile phones or radios, support only live communications. For communication to take place with existing wireless communication systems, a wireless network connection with a sufficient usable bit rate to support a live conversation must exist between the two wireless devices in communication with each other. If such a connection does not exist, then no communication can take place.

When a person is engaged in a conversation using their mobile phone, for example, a network connection between the phone and the local radio transceiver (i.e., a cell tower) of sufficient usable bit rate to support a live conversation must exist before any communication can take place. As long the mobile phone is within the range of the radio transceiver, the signal strength or usable bit rate is typically more than adequate for conducting phone conversations.

As the person using the mobile phone travels away from the radio transceiver, or they enter an area of poor coverage, such as in a tunnel or canyon, the usable bit rate or signal strength on the wireless network connection is typically reduced. If the distance becomes so great, or the reception so poor, the usable bit rate may be reduced beyond the range where communication may take place. Beyond this range, the user may no longer be able to continue an ongoing call or make a new call. Similarly, when too many users are conducting calls on the network at the same time, the total aggregate usable bit rate for all the calls may exceed the usable bit rate capacity of the radio transceiver. In such situations, certain calls may be dropped in an effort to preserve the usable bit rate or capacity for other calls. As the number of calls on the network decreases, or usable bit rate conditions on the wireless network improve, dropped users may again rejoin the network and make new calls as capacity on the network improves. In yet another example, in situations where there is severe radio interference, such as electrical or electromagnetic disturbances, intentional jamming of the wireless network, the antenna on a communication device or the radio transmitter is broken or not working properly, or the communication device and/or the radio transceiver have been improperly configured, the usable bit rate on the network connection may be insufficient for users to make calls or conduct live voice communications.

With current wireless voice communication systems, there is no persistent storage of the voice media of conversations. When a person engages in a conversation using either mobile phones or radios, there is no storage of the voice media of the conversations other than possibly what is necessary for transmission and rendering. Without persistent storage, the voice media of a conversation is irretrievably lost after transmission and rendering. There is no way to retrieve that voice media subsequent transmission or review. Consequently, wireless voice communication systems are reliant on network connections. If at any point the usable bit rate on the network is insufficient for a live conversation, regardless of the reason, there can be no communication. Mobile phones and radios are essentially unusable until the usable bit rate on the network improves to the point where live communications can commence again.

Wired communication networks may also have capacity problems when too many users are attempting to use the network at the same time or there are external interferences degrading the performance of the network. In these situations, calls are typically dropped and/or no new calls can be made in order to preserve usable bandwidth for other users. With wired voice communication systems, there is also typically no persistent storage of the voice media of a conversation. As a result, there is no way to transmit voice media from persistent storage at times when the usable bit rate on the wired network connection falls below what is necessary for maintaining a live conversation.

With most voice mail systems used with mobile or land-line phones, a network with sufficient usable bit rate to support a live conversation is needed before the voicemail system can be used. When a person is leaving a voice mail, a live connection is needed before a message can be left. Alternatively, the recipient must have a live connection before the message can be accessed and reviewed. With certain types of more advanced email systems, such as Visual voice mail, a recipient may download a received message and store it on their mobile phone for later review. With Visual voice mail, however, one can review a previously downloaded message when disconnected from the network or network conditions are poor. However, there is no way to generate and transmit messages when network conditions are inadequate to support a live connection. A network connection with a usable bit rate sufficient for maintaining a live conversation is still needed before a message can be generated and transmitted to another person.
US 2005/144247 describes a method and system which enables a first and second client to have synchronous or asynchronous communication over a communications network. A first client sends a voice message to a second client that can store and playback the message before responding. When responding, the second client can either establish a synchronous voice conversation or, by responding at a later time, establish an asynchronous voice conversation or text chat.
WO 2006/114673 describes an audio message system (AMS) for sending sound or audio based messages during a chat session between mobile communication devices over a communications network. The AMS messages are created and transmitted in a three-step process, including: (i) recording of the message; (ii) creating an AMS message from the recording; and (iii) transmitting the AMS message after it has been created. The processing of received messages is performed in two successive steps: (i) receiving the message in full and, (ii) reviewing the message after the full message has been received in full. A received message can be automatically presented for review after it has been fully received.

A method and communication device for the graceful degradation of wireless and wired voice networks, which extend the range and/or capacity of these networks, is therefore needed.

### SUMMARY OF THE INVENTION

An aspect of the invention provides a method for extending the usable range and/or capacity of a network, for voice communication on a communication device, comprising: receiving voice media generated while using the communication device, the communication device configured to be connected to a network through a network connection between the network and the communication device; encoding the voice media to generate a full bit rate representation of the media generated while using the communication device; persistently storing the full bit rate representation of the voice media generated while using the communication device; ascertaining if the usable bit rate on the network connection falls below a bit rate threshold, the bit rate threshold defining a minimum bit rate throughput sufficient for maintaining real-time communication; transmitting the voice media generated using the communication device from persistent storage when the ascertained usable bit rate is below the bit rate threshold, the voice media being transmitted at a bit rate which meets the usable bit rate on the network connection, thereby effectively extending the usable range and/or capacity of the network connection for voice communication when the ascertained usable bit rate falls below the bit rate threshold; receiving voice media over the network connection; persistently storing the voice media received over the network connection; and providing the ability to render the voice media received over the network connection when the voice media received over the network connection is of sufficient completeness that it will be decipherable when rendered.

A further aspect of the invention provides a communication device for extending the usable range and/or capacity of a network, wherein the communication device is configured to carry out the method aspect of the invention.

A yet further aspect of the invention provides a computer readable medium storing computer program code executable by a processing unit to carry out the method aspect of the invention.

The method and communication device involve the storage of voice media on the communication device. When the usable bit rate on the network is poor and below that necessary for conducting a live conversation, voice media is transmitted and received by the communication device at the available usable bit rate on the network. Although latency may be introduced, the storage of both transmitted and received media of a conversation provides the ability to extend the useful range of wireless networks beyond what is required for live conversations. In addition, the capacity and robustness in not being affected by external interferences for both wired and wireless communications is improved.

### BRIEF DESCRIPTION OF THE DRAWINGS

The invention may best be understood by reference to the following description taken in conjunction with the accompanying drawings, which illustrate specific embodiments of the invention.

Figure 1A is a diagram illustrating an exemplary wireless communication using the present invention.

Figure 1B is a diagram showing an exemplary wired communication device of the present invention.

Figure 2 is a plot illustrating the graceful degradation of wireless network services versus range.

Figure 3 is a plot illustrating the graceful degradation of network services versus capacity.

Figure 4 is a plot illustrating the graceful degradation of network services in the presence of external interference.

Figure 5 is a plot illustrating adaptive live optimization for further extending the graceful degradation of services according to the present invention.

Figure 6 is a diagram of a communication device with persistent storage in accordance with the present invention.

It should be noted that like reference numbers refer to like elements in the figures.

### DETAILED DESCRIPTION OF SPECIFIC EMBODIMENTS

The invention will now be described in detail with reference to various embodiments thereof as illustrated in the accompanying drawings. In the following description, specific details are set forth in order to provide a thorough understanding of the invention. It will be apparent, however, to one skilled in the art, that the invention may be practiced without using some of the implementation details set forth herein. It should also be understood that well known operations have not been described in detail in order to not unnecessarily obscure the invention.

A voice and other media communication and management system and method can provide one or more of the following features and functions: (i) enabling users to participate in multiple conversation types (MCMS), including live phone calls, conference calls, voice messaging, consecutive (MCMS-C) or simultaneous (MCMS-S) communications; (ii) enabling users to review the messages of conversations in either a live mode or a time-shifted mode (voice messaging); (iii) enabling users to seamlessly transition a conversation between a synchronous "live" near real-time mode and a time shifted mode; (iv) enabling users to participate in conversations without waiting for a connection to be established with another participant or the network. This attribute allows users to begin conversations, participate in conversations, and review previously received time-shifted messages of conversations even when there is no network available, when the network is of poor quality, or other participants are unavailable; (v) enabling the system to save media payload data at the sender and, after network transmission, saving the media payload data at all receivers; (vi) enabling the system to organize messages by threading them sequentially into semantically meaningful conversations in which each message can be identified and tied to a given participant in a given conversation; (vii) enabling users to manage each conversation with a set of user controlled functions, such as reviewing "live", pausing or time shifting the conversation until it is convenient to review, replaying in a variety of modes (e.g., playing faster, catching up to live, jump to the head of the conversation) and methods for managing conversations (archiving, tagging, searching, and retrieving from archives); (viii) enabling the system to manage and share presence data with all conversation participants, including online status, intentions with respect to reviewing any given message in either the live or time-shifted mode, current attention to messages, rendering methods, and network conditions between the sender and receiver; (iix) enabling users to manage multiple conversations at the same time, where either (a) one conversation is current and all others are paused (MCMS); (b) multiple conversations are rendered consecutively (MCMS-C), such as but not limited to tactical communications; or (c) multiple conversations are active and simultaneously rendered (MCMS-S), such as in a stock exchange or trading floor environment; and (ix) enabling users to store all conversations, and if desired, persistently archive them in a tangible medium, providing an asset that can be organized, indexed, searched, transcribed, translated and/or reviewed as needed.

The salient feature of the above-described communication system with regard to the graceful degradation of voice communication services is the persistent storage of the voice media of conversations. As noted above with prior art or legacy voice wired and wireless communication systems, no voice transmissions can take place when the usable bit rate on the network connection is insufficient to support live communications. With the persistent storage, however, voice transmissions may occur from storage. Voice transmissions therefore do not have to occur as the voice media is being generated. Instead, at times when the usable bit rate is insufficient for live transmissions, the voice media may be transmitted from persistent storage as network conditions permit. When transmitting from persistent storage, a certain amount of latency may be introduced during the back and forth transmissions of the conversation. The ability to transmit out of persistent storage, however, effectively extends the usability of the network beyond the range and/or capacity where conventional wireless or wired networks would otherwise fail. As a result, communications can still take place, even when usable bit rate conditions on the network are poor or constrained beyond where previously no communication could take place.

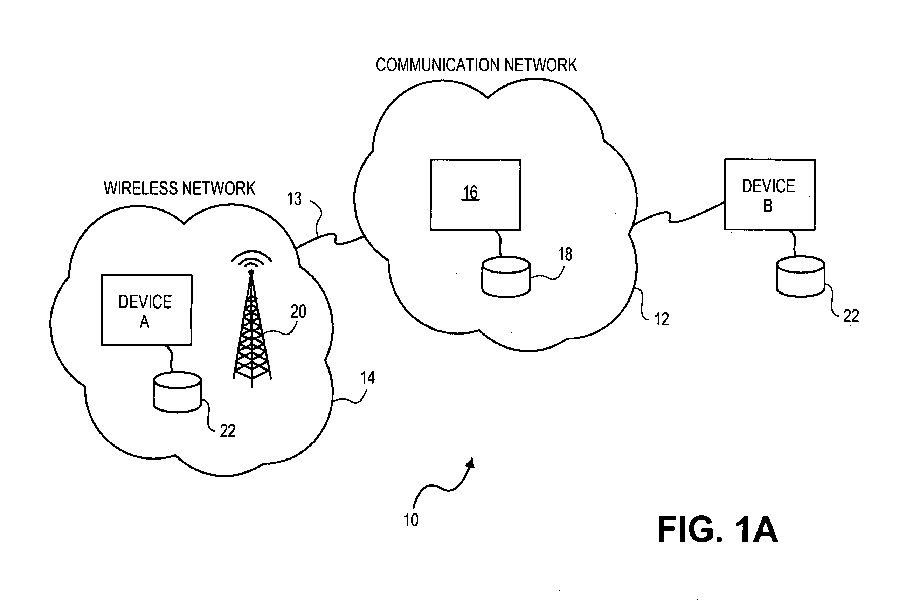

Referring to Figure 1A, a diagram illustrating an exemplary wireless voice communication system of the present invention is shown. The exemplary communication system 10 includes a communication network 12 and a wireless network 14 for enabling voice communication between a wireless device A within the wireless network 14 and a second communication device B connected to the network 12. A gateway connection 13 connects the communication network 12 and the wireless network 14. The communication network 12 may include one or more hops 16 between the wireless network 14 and the second communication device B. Each hop includes a storage element 18 for the persistent storage of media. The communication device A, which is a wireless device, such as either a mobile phone or a radio, connects through a wireless network connection with the wireless network 14 through a radio transceiver 20. The communication devices A and B each include a storage element 22 for the persistent storage of media respectively.

When a conversation takes place between device A and device B, a network connection is made between the two devices through the communication network 12 and the wireless network 14. All voice media of the conversation, regardless if it was transmitted or received, is persistently stored in the storage elements 22 of devices A and B as well as in the storage element 18 of each hop on the network 12 between the two devices.

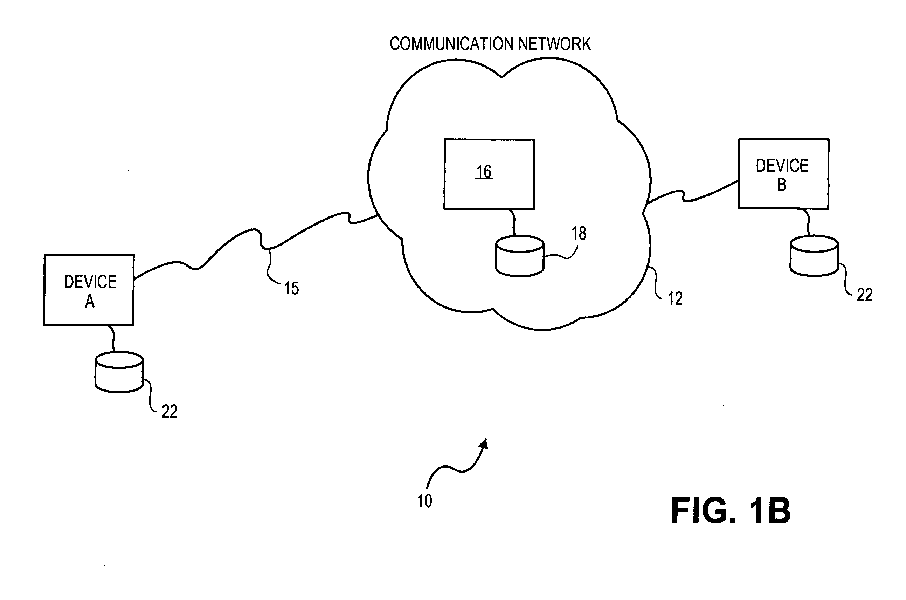

Referring to Figure 1B, a diagram illustrating another exemplary voice communication system of the present invention is shown. In this embodiment, both devices A and B are connected to communication network 12. In this embodiment, device A is connected to the network 12 through a wired connection 15. When a conversation takes place between device A and device B, a network connection is established between the two devices across network 12. One or more hops 16, each with persistent storage 18, may be required in establishing the network connection between the devices.

It should be noted that the specific network configuration and the communication devices illustrated in Figures 1A and 1B are exemplary. In no way, however, should either particular configuration be construed as limiting. In various embodiments, networks 12 and 14 can both be wireless, wired, or any combination thereof. Also, either communication device A or device B can each be either wired or wireless devices. The communication devices A and B can also be two nodes in the same wireless or wired networks or two nodes in different networks. If nodes in different networks; the two networks can communicate directly with one another, or they may communicate through any number gateways or hops in intermediate wired or wireless communication networks. In addition, the capability of each communication device to persistently store voice media of a conversation may vary. For the sake of simplicity, the network connection illustrated in Figures 1A and 1B is between just two communication devices. The present invention, however, may be used with voice conversations involving any number of wireless or wired communication devices. In the embodiment illustrated in both Figures 1A and 1B, both devices A and B locally and persistently store the media of the conversation. Alternatively, device A may locally and persistently store media, while device B does not. In yet another embodiment, the media for either device A or device B can be persistently stored on a storage device 18 of a hop 16 on the network 12 on behalf either device A or device B respectively. Regardless of the actual configuration, the only requirement for implementing the graceful degradation for device A is at device A and at least one other location, which may be at device B or at any intermediate hop 16 between the two devices.

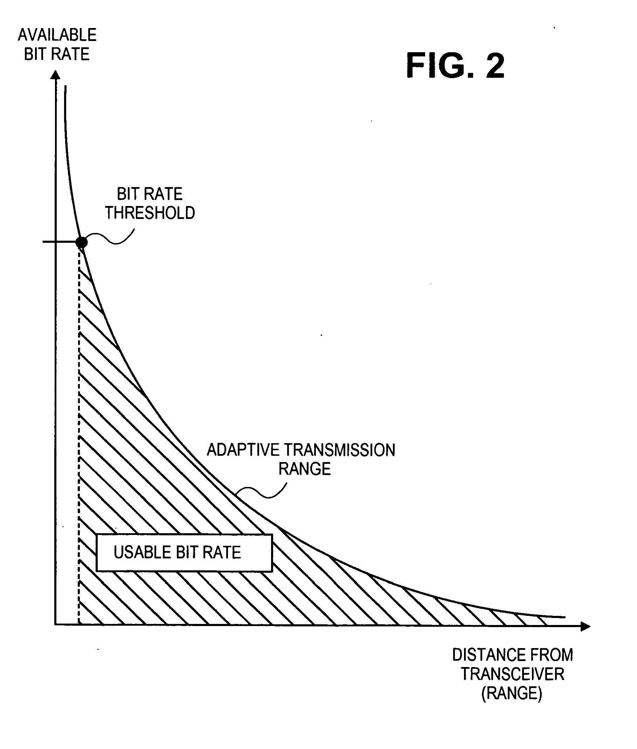

Figures 2 through 4 illustrate the graceful degradation of services with respect to range, capacity and external interferences that may affect the network respectively. It should be understood that the graceful degradation of services with respect to range is applicable only to wireless networks. The graceful degradation of services with regard to capacity and external interferences, however, equally applies to both wired and wireless networks.

Referring to Figure 2, a plot illustrating the graceful degradation of wireless services versus range in according to the present invention is illustrated. The diagram plots available usable bit rate on the network on the vertical axis verses the distance the communication device A is from the radio transceiver 20 on the horizontal axis. When the communication device A is relatively close, the available usable bit rate on the network is high. But as the communication device A travels away from the radio transceiver 20, or enters a region of reduced signal strength such as a tunnel or canyon, the usable bit rate on the network connection is reduced, as represented by the downward slope of the usable bit rate curve on the plot.

As the signal strength decreases, the amount of bit rate loss experienced on the network connection will also typically increase. At a certain point, a bit rate threshold is exceeded. Below this point, the bit rate loss typically becomes too large to maintain a live conversation with conventional wireless networks. In other words, the bit rate defines a minimum bit rate throughput sufficient for maintaining near real-time communication.

In one embodiment, the sending device A ascertains when the usable bit rate on the network connection falls below the bit rate threshold by: (i) receiving one or more reports each including a measured transfer rate at which bits transmitted over the network connection safely arrive at a recipient over a predetermined period of time; (ii) computing the usable bit rate on the network connection based on the received one or more reports; and (iii) comparing the computed usable bit rate with the bit rate threshold. The reports are generated by the recipient and sent to device A over the network connection. The receipt reports may include a notation of missing, corrupted or reduced bit rate representations of voice media as well as other network parameters such jitter.

In one embodiment, the bit rate throughput threshold is set at eighty percent (80%) of the bit rate throughput needed to transmit and decode the full bit rate representation of the voice media at the same rate the voice media was originally encoded. It should be noted that this percentage may vary and should not be construed as limiting. The throughput percentage rate may be higher or lower.

The portion of the usable bit rate curve below the bit rate threshold is defined as the adaptive transmission range. When the usable bit rate on the network is in the adaptive transmission range, device A transmits the media from persistent storage. As a result, the usable bit rate below the threshold becomes usable.

The amount of latency associated with transmission below the throughput threshold will vary, typically depending on the range between the communication device A and the radio transceiver 20. If the communication device A is at a range where the bit rate loss is just below the threshold, the amount of latency may be inconsequential. As signal strength decreases, however, latency will typically become progressively greater. As latency increases, the practicality of conducting a voice conversation in the live or real-time mode decreases. Beyond the point where a live voice conversation is no longer practical, voice communication can still take place, but in a time-shifted mode. A user may generate a voice message, which is persistently stored. As usable bit rate conditions on the network permit, transmissions of the media occur from persistent storage. Alternatively, when receiving messages, the voice media may trickle in over the network, also as usable bit rate conditions permit. When the quality or completeness of the received voice media becomes sufficiently good as transmissions are received, they may be retrieved from persistent storage and reviewed or rendered at the receiving communication device. Communication can therefore still take place when signal strength is poor, due to either device A being a relatively far distance from a transceiver 20 or in a location of poor coverage, such as in a tunnel or canyon.

As illustrated in the plot, the available usable bit rate gets progressively smaller as the range from the radio transceiver 20 increases. Eventually the usable bit rate is reduced to nothing, meaning the communication device A is effectively disconnected from the wireless network 14. The persistent storage of media on the communication device A still allows limited communication capabilities even when disconnected from the network. Messages can be generated and stored on communication device A while disconnected from the network. As the device moves within the adaptive transmission range, the usable bit rate range is used for the transmission of the messages. Alternatively, the user of communication device A may review previously received messages while disconnected from the network and receive new messages as usable bit rate on the network permits.

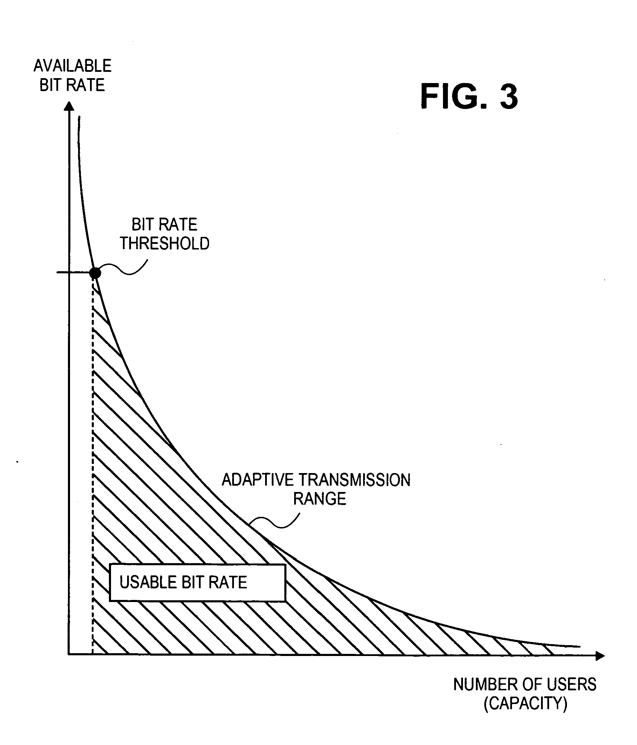

Referring to Figure 3, a plot illustrating the graceful degradation of wireless services versus the number of users (i.e., capacity) is shown. As illustrated in the Figure, the available usable bit rate per user increases as the number of users or capacity decreases and vice-versa. As capacity increases, the usable bit rate decreases. Eventually, the bit rate threshold is crossed. Below this threshold, all users of the network are forced to operate in the adaptive transmission range when sending and receiving voice messages. In an alternative embodiment, only certain users may be forced into the adaptive transmission range to preserve the usable bit rate of the system for other users who will continue to operate with a usable bit rate above the throughput threshold. The system may decide which users are provided either full or reduced service based on one or more priority schemes, such different levels of subscription services, those first on the network have higher priority than those that have recently joined the network, or any other mechanism to select certain users over other users.

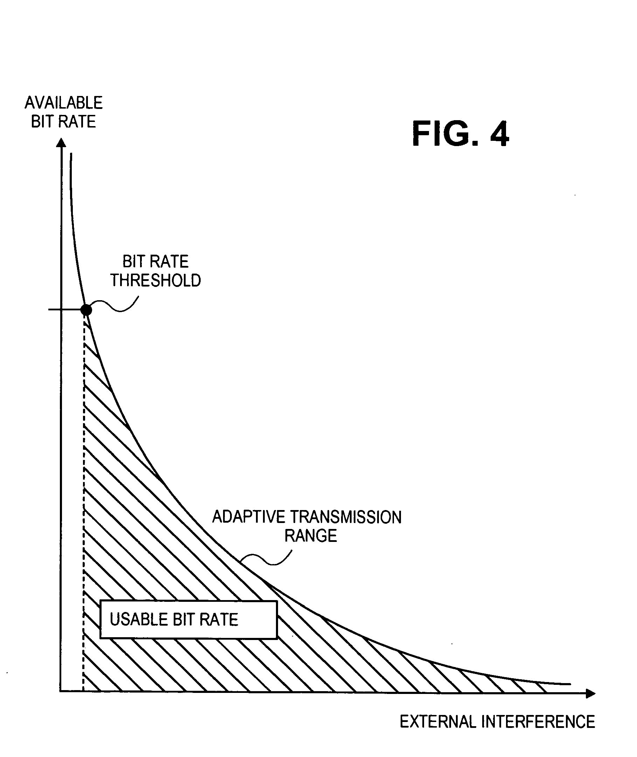

Referring to Figure 4, a plot illustrating the graceful degradation of services in the presence of an external interference is shown. In this diagram, as the severity of the external interference increases, usable bit rate decreases and vice versa. In situations where the available usable bit rate falls below the bit rate threshold, the user of communication device A may continue communicating in the adaptive transmission range in the same manner as described above. The use of persistent storage of media and the managing of transmissions to meet available usable bit rate therefore increases system robustness and gracefully extends the effective range and capacity of services in situations where external interference would otherwise prevent communication.

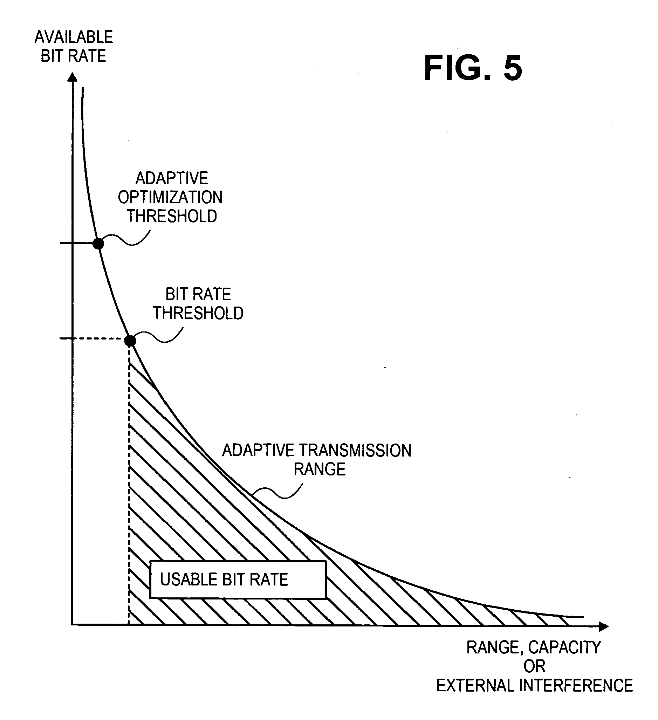

Referring to Figure 5, a plot illustrating adaptive live optimization for further extending the graceful degradation of wired and wireless services according to another embodiment is shown. In the plot, the usable bit rate curve includes an adaptive optimization threshold and the bit rate threshold. Adaptive live optimization techniques for maintaining a conversation in the live or real-time mode when usable bit rate on the network falls below the adaptive optimization threshold can be used. These adaptive live optimization techniques have the net effect of pushing the bit rate threshold down the usable bit rate curve. In other words, by applying the adaptive live optimization techniques, the amount of available usable bit rate needed on the network for conducting a live conversation is reduced. This is evident in the Figure 5, which shows the bit rate threshold pushed further down the usable bit rate curve relative to the plots illustrated in Figures 2, 3 and 4.

With adaptive live optimization, media is sent from the sending device (e.g., device A) to the receiving device in successive transmission loops. Within each transmission loop, the sending node ascertains if the instantaneous usable bit rate is sufficient to transmit both time-sensitive and the not time sensitive media available for transmission. If there is sufficient usable bit rate on the network, then both types of media are transmitted. The time sensitive media is sent using first packets with a first packetization interval and a first payload size at a rate sufficient for a full bit rate representation of the media to be reviewed upon receipt by the recipient. The non time-sensitive media on the other hand is transmitted using second packets with a second interval set for network efficiency, where the second packet interval is typically larger than the first packetization interval.

The time-sensitivity of the media is determined by either a declared or inferred intent of a recipient to review the media immediately upon receipt. The full bit rate representation of the media is derived from when the media was originally encoded. Typically this means when a person speaks into their phone or radio, the received analog media is encoded and digitized. This encoded media is referred to herein as the full bit rate representation of the media. The sending node ascertains usable bit rate on the network based on receipt reports from the receiving node. The receipt reports include measured network parameters, such the corrupted or missing packets (i.e., media loss) as well as possibly other parameters, including jitter for example.

If the usable bit rate is inadequate for transmitting both types of available media, then the sending node ascertains if there is enough usable bit rate on the network connection for transmitting just the time-sensitive media. If so, the time-sensitive media is transmitted at the first packetization interval and first payload size and at the rate sufficient for the full bit rate representation to be reviewed upon receipt. The transmission of the not time-sensitive media is deferred until usable bit rate in excess of what is needed for time-sensitive transmissions becomes available.

If the usable bit rate on the network connection is not sufficient for sending just the time-sensitive media, then several techniques to reduce the number of bits used to represent the time-sensitive media is applied. In a first technique, the number of bits included in the first payloads is reduced and the reduced payload sized packets are then transmitted at the first packetization interval. In other words, the number of bits used to represent each unit of time (i.e., time-slice) of voice media is reduced relative to the full bit rate representation of the voice media. The reduction of the bits per payload may be accomplished by adjusting codec settings, using different codecs, applying a compression algorithm, or any combination thereof.

If there still is not sufficient bandwidth, then the packetization interval used to transmit the packets with the reduced bit payloads is progressively increased. By increasing the packetization interval, latency is introduced. Eventually, if the packetization interval is increased too much, then it becomes impractical to maintain the conversation in the live or real-time mode.

Lastly, the adaptive live optimization controls the rate of transmitted and received voice transmissions to meet the usable available bit rate on the network connection. As bit rate becomes available, available voice media is either sent or received at a rate determined by usable bit rate conditions on the network. Consequently, communication can still take place. The adaptive live optimization therefore enables conversations to continue when network conditions would otherwise prevent live communications.

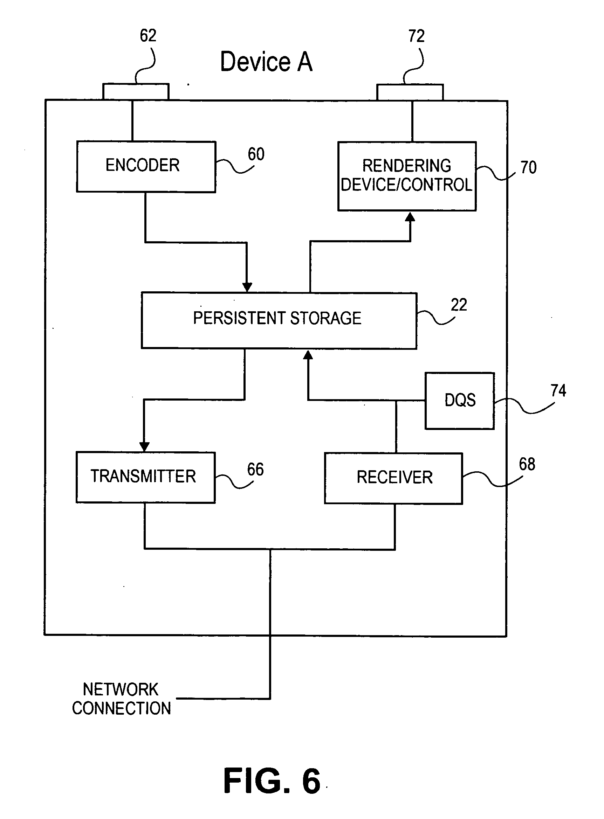

Referring to Figure 6, a diagram of device A is illustrated. The device A includes an encoder 60 configured to receive analog voice signals from a microphone 62, the persistent storage device 22, a transmitter 66, a receiver 68, a rendering/control device 70 and a speaker 72. During voice communications, the user of device A will periodically generate voice media by speaking into the microphone 62. The encoder 60 encodes or digitizes the voice media, generating a full bit rate representation of the voice media, which is persistently stored in device 22. The transmitter 66 is responsible for (i) receiving receipt reports from a recipient, (ii) calculating the usable bit rate on the network connection, (iii) ascertaining if the usable bit rate exceeds or is below the bit rate threshold sufficient for live communication, and (iv) either (a) transmits the full bit rate representation of the voice media when the threshold is exceeded or (b) generates and transmits only time-sensitive and/or a reduced bit rate version of the voice media, commensurate with the usable bit rate, when the usable bit rate is less than the threshold. Alternatively, the receiver 68 stores the voice media received over the network connection in persistent storage device 64. When the received media is of sufficient completeness, it may be retrieved from persistent storage by rendering/contol device 70 and played through speaker 72 for listening or review by the user. The review of media may occur in either a near real-time mode or in a time-shifted mode. When in the time-shifted mode, the media is retrieved from the persistent storage device 22 and rendered.

A data quality store (DQS) and manager 74 is coupled between the receiver 68 and the persistent storage device 22. The data quality store and manager 74 is responsible for noting any missing, corrupted or reduced bit rate versions of the voice media received over the network connection in the data quality store. The DQS and manager 74 are also responsible for transmitting requests for retransmission of any voice media (or other types of received media) noted in the data quality store. When the requested media is received after the request for retransmission is satisfied, the notation corresponding to the media is removed from the DQS. This process is repeated until a complete copy of the media is received and persistently stored, wherein the complete copy is a full bit rate representation of the media as originally encoded by the originating device. In this manner, both the sending and receiving communication devices are able to maintain synchronous copies of the voice (and other types) of media of a conversation.

In one embodiment of device A, the transmitter 66 may transmit voice or other media directly from encoder 60 in parallel with the persistent storage in device 22 when the user of the device A is communicating in the real-time mode. Alternatively, the media can first be written in persistent storage 22 and then transmitted from storage. With the latter embodiment, any delay associated with the storage occurs so fast that it is typically imperceptible to users and does not interfere or impede with the real-time communication experience of the user. Similarly, received media can be rendered by device 70 in parallel with persistent storage or serially after persistent storage when in the real-time mode.

The aforementioned description is described in relation to a wired or wireless communication devices. It should be understood that the same techniques and principles of the present invention also apply to the hops between a sending and a receiving pair in either a wireless or wired voice network. In the case of a hop 16, voice media is typically not generated on these devices. Rather these devices receive voice media from another source, such as a phone, radio or another hop on the network, and are responsible for optionally persistently storing the received voice media and forwarding the voice media on to the next hop or the recipient as described above.

It should also be understood that the present invention may be applied to any voice communication system, including mobile or cellular phone networks, police, fire, military taxi, and first responder type communication systems, legacy circuit-based networks, VoIP networks, the Internet, or any combination thereof.

Device A may be one of the following: land-line phone, wireless phone, cellular phone, satellite phone, computer, radio, server, satellite radio, tactical radio or tactical phone The types of media besides voice that may be generated on device A and transmitted may further include video, text, sensor data, position or GPS information, radio signals, or a combination thereof.

The present invention provides a number of advantages. The range of wireless voice networks is effectively extended as communication may continue beyond the throughput threshold. In addition, the present invention may increase the number of effective users or capacity that may use either a wireless or wired voice communication system. Rather than dropping users when system usable bit rate is overwhelmed, the present invention may lower the usable bit rate below the throughput threshold for some or all users until usable bit rate conditions improve. Lastly, the present invention increases the robustness of a both wireless and wired communication system in dealing with external interferences.

Although many of the components and processes are described above in the singular for convenience, it will be appreciated by one of skill in the art that multiple components and repeated processes can also be used to practice the techniques of the system and method described herein. Further, while the invention has been particularly shown and described with reference to specific embodiments thereof, it will be understood by those skilled in the art that changes in the form and details of the disclosed embodiments may be made without departing from the scope of the invention. For example, embodiments of the invention may be employed with a variety of components and should not be restricted to the ones mentioned above. It is therefore intended that the invention be interpreted to include all variations and equivalents that fall within the scope of the invention as defined by the claims,

## Claims

1. A method for extending the usable range and/or capacity of a network (12, 14), for voice communication on a communication device (A, B), comprising:
receiving voice media generated while using the communication device (A, B), the communication device configured to be connected to a network (12, 14) through a network connection between the network and the communication device;
encoding the voice media to generate a full bit rate representation of the media generated while using the communication device;
persistently storing the full bit rate representation of the voice media generated while using the communication device,
the method **characterised by** the steps of:
ascertaining if the usable bit rate on the network connection falls below a bit rate threshold, the bit rate threshold defining a minimum bit rate throughput sufficient for maintaining real-time communication;
transmitting the voice media generated using the communication device from persistent storage when the ascertained usable bit rate is below the bit rate threshold, the voice media being transmitted at a bit rate which meets the usable bit rate on the network connection, thereby effectively extending the usable range and/or capacity of the network connection for voice communication when the ascertained usable bit rate falls below the bit rate threshold;
receiving voice media over the network connection;
persistently storing the voice media received over the network connection; and
providing the ability to render the voice media received over the network connection when the voice media received over the network connection is of sufficient completeness that it will be decipherable when rendered.

2. The method of claim 1, wherein ascertaining if the usable bit rate on the network connection falls below the bit rate threshold further comprises:
receiving one or more reports each including a measured transfer rate at which bits transmitted over the network connection safely arrive at a recipient over a predetermined period of time;
computing the usable bit rate on the network connection based on the received one or more reports; and
comparing the computed usable bit rate with the bit rate threshold.

3. The method of any of the preceding claims, wherein the minimum bit rate throughput sufficient for maintaining real-time communication is at least 80% of the bit rate throughput needed to transmit and decode the full bit rate representation of the voice media at the same rate the voice media was originally encoded.

4. The method of any of the preceding claims, further comprising:
ascertaining when the usable bit rate on the network connection exceeds the bit rate threshold; and
transmitting the full bit rate representation of the voice media generated using the communication device without introducing latency when the ascertained usable bit rate exceeds the bit rate threshold.

5. The method of any of the preceding claims, wherein transmitting the full bit rate representation of the voice media further comprises:
(i) defining a transmission loop;
(ii) ascertaining the voice media generated using the communication device available for transmission in the defined transmission loop; and
(iii) transmitting the full bit rate representation of the available voice media generated using the communication device during the transmission loop.

6. The method of claim 5, further comprising defining successive transmission loops and repeating (i) through (iii) for each loop.

7. The method of any of the preceding claims, wherein transmitting the voice media generated while using the communication device from persistent storage further comprises varying the amount of latency during the transmission as needed so that the transmission bit rate meets the usable bit rate on the network connection when the ascertained usable bit rate falls below the bit rate threshold.

8. The method of any of the preceding claims, wherein transmitting the voice media generated using the communication device from persistent storage further comprises:
defining a transmission loop;
determining if the ascertained usable bit rate is not sufficient to transmit the available voice media in the defined transmission loop;
ascertaining time-sensitive voice media among all the available voice media ready for transmission, the time-sensitivity of the voice media being determined by an intent of a recipient to review the voice media upon receipt;
transmitting only the available time-sensitive voice media if the ascertained usable bit rate is sufficient to transmit only the available time-sensitive voice media.

9. The method of claim 8, further comprising:
determining if the ascertained usable bit rate is not sufficient to transmit only the available time-sensitive voice media; and, if so
generating a reduced bit rate representation of the available time-sensitive voice media; and
transmitting the reduced bit rate representation of the available time-sensitive voice media.

10. The method of claim 8 or claim 9, wherein generating the reduced bit rate representation further comprises using fewer bits per unit of time when packetizing the available time-sensitive voice media.

11. The method of any of claims 8 through 10, wherein generating the reduced bit rate representation of the available time-sensitive voice media comprises using (a) one or more different codec settings, (b) one or more different codecs, (c) a compression algorithm; or (d) any combination of (a) through (c) when packetizing the media for transmission.

12. The method of any of claims 8 through 11, wherein generating the reduced bit rate representation of the available time-sensitive voice media comprises increasing the packetization interval used to transmit the available time-sensitive voice media.

13. The method of any of claims 8 through 12, wherein generating the reduced bit rate representation further comprises adjusting the transmission rate at which packets containing the available time-sensitive voice media are transmitted.

14. The method of claim 9, wherein generating the reduced bit rate representation of the available time-sensitive voice media further comprises performing one or more of the following:
(i) using fewer bits per unit of time when packetizing the reduced bit rate representation of the available time-sensitive voice media relative to the full bit rate representation;
(ii) increasing the packetization interval when transmitting the available time-sensitive voice media;
(iii) adjusting the rate at which packets containing the available time-sensitive voice media are transmitted; or
(iv) any combination of (i) through (iii).

15. The method of claim 8 further comprising:
defining successive transmission loops; and
performing the method of claims 8, 9 and 14 as needed for each of the successive transmission loops.

16. The method of any of the preceding claims, further comprising;
(i) maintaining a data quality store;
(ii) noting any missing, corrupted or reduced bit rate versions of the voice media received over the network connection in the data quality store; and
(iii) transmitting from the communication device over the network connection requests for retransmission of any voice media noted in the data quality store.

17. The method of claim 16, further comprising:
(iv) removing the notation from the data quality store as the requests for retransmission are satisfied; and
(v) repeating (i) through (iv) until a complete copy of the voice media received over the network connection is received and persistently stored, wherein the complete copy is a full bit rate representation of the voice media as it was originally encoded.

18. The method of any of the preceding claims, wherein the usable range of the network connection is effectively extended when the ascertained usable bit rate falls below the bit rate threshold to just above the point before the usable bit rate on the network connection is reduced to nothing.

19. The method of any of the preceding claims, further comprising:
ascertaining when the usable bit rate on the network connection is reduced to nothing;
persistently storing voice media generated using the communication device when the usable bit rate on the network connection is reduced to nothing;
delaying the transmission of the voice media generated using the communication device when the usable bit rate on the network connection is reduced to nothing; and
transmitting the voice media from persistent storage after the delay as the usable bit rate on the network connection increases.

20. The method of any of the preceding claims, further comprising defining a conversation and ascertain the voice media generated using the communication device and the voice media received over the network connection associated with the conversation.

21. The method of claim 20, further comprising persistently storing the voice media generated using the communication device and the voice media received over the network connection associated with the conversation in a time-based format.

22. The method of claim 21, wherein providing the ability to render the voice media received over the network connection further comprises providing the ability to review the voice media associated with the conversation in a time-shifted mode by retrieving the media from persistent storage and rendering the retrieved media on the communication device in the time-based format.

23. The method of any of the preceding claims, wherein providing the ability to render the voice media received over the network connection further comprises rendering the media on the communication device as it is received over the network connection in a real-time mode.

24. The method of any of the preceding claims, further comprising persistently storing the full bit rate representation of the media generated using the communication device and voice media received over the network connection at the communication device.

25. The method of any of the preceding claims, further comprising persistently storing the full bit rate representation of the media generated using the communication device and voice media received over the network connection on the network at a location remote from the communication device.

26. The method of any of the preceding claims, wherein the network connection is a wireless network connection and the transmitting the voice media generated using the communication device from persistent storage at a bit rate which meets the usable bit rate on the wireless network connection effectively extends both the usable range and capacity of the wireless network connection.

27. The method of any of the preceding claims, wherein the network connection is a wired network connection and the transmitting the voice media generated using the communication device from persistent storage at a bit rate which meets the usable bit rate on the wired network connection effectively extends the usable capacity of the wired network connection.

28. The method of any of the preceding claims, wherein the communication device comprises one of the following: land-line phone, wireless phone, cellular phone, satellite phone, computer, radio, server, satellite radio, tactical radio or tactical phone.

29. The method any of the preceding claims, further comprising transmitting and receiving, in addition to the voice media, one or more of the following types of media: video, text, sensor data, position or GPS information, radio signals, or a combination thereof.

30. The method of any of the preceding claims, wherein the media generated using the communication device and the media received over the network connection are persistently stored on the communication device.

31. The method of any of the preceding claims, wherein the media generated using the communication device and the media received over the network connection are persistently stored on the network.

32. A communication device (A, B) for extending the usable range and/or capacity of a network, wherein the communication device is configured to carry out the method of any of claims 1 to 24 or 26 to 30.

33. A computer readable medium storing computer program code executable by a processing unit to carry out the method of any of claims 1 to 24 or 26 to 30.

## Patentansprüche

1. Verfahren zum Erweitern des nutzbaren Bereichs und/oder einer Kapazität eines Netzwerks (12, 14) für eine Sprachkommunikation über eine Kommunikationsvorrichtung (A, B), umfassend:
Empfangen von Sprachmedien, welche während einer Verwendung der Kommunikationsvorrichtung (A, B) erzeugt wurden, wobei die Kommunikationsvorrichtung ausgestaltet ist, mit einem Netzwerk (12, 14) über eine Netzwerkverbindung zwischen dem Netzwerk und der Kommunikationsvorrichtung verbunden zu werden;
Kodieren der Sprachmedien, um eine Vollbitratendarstellung der Medien, welche während einer Verwendung der Kommunikationsvorrichtung erzeugt wurden, zu erzeugen;
persistentes Speichern der Vollbitratendarstellung der Sprachmedien, welche während der Verwendung der Kommunikationsvorrichtung erzeugt wurden,
wobei das Verfahren **gekennzeichnet ist durch** die Schritte:
Bestimmen, ob die nutzbare Bitrate auf der Netzwerkverbindung unter einen Bitratenschwellenwert fällt, wobei der Bitratenschwellenwert einen minimalen Bitratendurchsatz definiert, welcher ausreichend für ein Aufrechterhalten einer Echtzeitkommunikation ist;
Übertragen der Sprachmedien, welche während der Verwendung der Kommunikationsvorrichtung erzeugt wurden, von einem persistenten Speicher, wenn die bestimmte nutzbare Bitrate unterhalb des Bitratenschwellenwerts ist, wobei die Sprachmedien mit einer Bitrate übertragen werden, welche der nutzbaren Bitrate auf der Netzwerkverbindung entspricht,
wodurch der nutzbare Bereich und/oder eine Kapazität der Netzwerkverbindung für eine Sprachkommunikation wirksam erweitert wird, wenn die bestimmte nutzbare Bitrate unter den Bitratenschwellenwert fällt;
Empfangen von Sprachmedien über die Netzwerkverbindung;
persistentes Speichern der Sprachmedien, welche über die Netzwerkverbindung empfangen wurden; und
Bereitstellen der Möglichkeit, die Sprachmedien, welche über die Netzwerkverbindung empfangen wurden, wiederzugeben, wenn die Sprachmedien, welche über die Netzwerkverbindung empfangen wurden, von ausreichender Vollständigkeit sind, dass sie entschlüsselbar sind, wenn sie wiedergegeben werden.

2. Verfahren nach Anspruch 1, wobei das Bestimmen, ob die nutzbare Bitrate auf der Netzwerkverbindung unter den Bitratenschwellenwert fällt, ferner umfasst:
Empfangen von einem oder mehreren Berichten, welche jeweils eine gemessene Übertragungsrate aufweisen, mit welcher über die Netzwerkverbindung übertragene Bits über eine vorbestimmte Zeitdauer sicher bei einem Empfänger ankommen;
Berechnen der nutzbaren Bitrate auf der Netzwerkverbindung auf der Grundlage der empfangenen einen oder mehreren Berichte; und
Vergleichen der berechneten nutzbaren Bitrate mit dem Bitratenschwellenwert.

3. Verfahren nach einem der vorhergehenden Ansprüche, wobei der minimale Bitratendurchsatz, welcher zum Aufrechterhalten einer Echtzeitkommunikation ausreichend ist, mindestens 80% des Bitratendurchsatzes beträgt, welcher benötigt wird, um die Vollbitratendarstellung der Sprachmedien mit der gleichen Rate, bei welcher die Sprachmedien ursprünglich kodiert wurden, zu übertragen und zu dekodieren.

4. Verfahren nach einem der vorhergehenden Ansprüche, ferner umfassend:
Bestimmen, wann die nutzbare Bitrate auf der Netzwerkverbindung den Bitratenschwellenwert überschreitet; und
Übertragen der Vollbitratendarstellung der unter Verwendung der Kommunikationsvorrichtung erzeugten Sprachmedien ohne eine Verzögerung einzuführen, wenn die bestimmte nutzbare Bitrate den Bitratenschwellenwert überschreitet.

5. Verfahren nach einem der vorhergehenden Ansprüche, wobei das Übertragen der Vollbitratendarstellung der Sprachmedien ferner umfasst:
(i) Definieren einer Übertragungsschleife;
(ii) Bestimmen der unter Verwendung der Kommunikationsvorrichtung erzeugten und für eine Übertragung in der definierten Übertragungsschleife verfügbaren Sprachmedien; und
(iii) Übertragen der Vollbitratendarstellung der verfügbaren unter Verwendung der Kommunikationsvorrichtung erzeugten Sprachmedien bei der Übertragungsschleife.

6. Verfahren nach Anspruch 5, ferner umfassend ein Definieren von aufeinanderfolgenden Übertragungsschleifen und Wiederholen von (i)-(iii) für jede Schleife.

7. Verfahren nach einem der vorhergehenden Ansprüche, wobei das Übertragen der Sprachmedien, welche während einer Verwendung der Kommunikationsvorrichtung erzeugt wurden, von dem persistenten Speicher ferner ein Verändern des Betrags einer Verzögerung während der Übertragung umfasst, wie sie benötigt wird, so dass die Übertragungsbitrate der nutzbaren Bitrate auf der Netzwerkverbindung entspricht, wenn die bestimmte nutzbare Bitrate unter den Bitratenschwellenwert fällt.

8. Verfahren nach einem der vorhergehenden Ansprüche, wobei das Übertragen der Sprachmedien, welche unter Verwendung der Kommunikationsvorrichtung erzeugt wurden, von dem persistenten Speicher ferner umfasst:
Definieren einer Übertragungsschleife;
Bestimmen, ob die bestimmte nutzbare Bitrate nicht ausreichend ist, um die verfügbaren Sprachmedien in der definierten Übertragungsschleife zu übertragen;
Bestimmen von zeitsensitiven Sprachmedien unter allen verfügbaren Sprachmedien, welche für eine Übertragung bereit sind, wobei die Zeitsensitivität der Sprachmedien durch eine Absicht eines Empfängers bestimmt wird, die Sprachmedien nach einem Empfang nachzuprüfen;
Übertragen von nur den verfügbaren zeitsensitiven Sprachmedien, wenn die bestimmte nutzbare Bitrate ausreichend ist, nur die verfügbaren zeitsensitiven Sprachmedien zu übertragen.

9. Verfahren nach Anspruch 8, ferner umfassend:
Bestimmen, ob die bestimmte nutzbare Bitrate nicht ausreichend ist, nur die verfügbaren zeitsensitiven Sprachmedien zu übertragen; und, wenn dies zutrifft,
Erzeugen einer verringerten Bitratendarstellung der verfügbaren zeitsensitiven Sprachmedien; und
Übertragen der verringerten Bitratendarstellung der verfügbaren zeitsensitiven Sprachmedien.

10. Verfahren nach Anspruch 8 oder 9, wobei das Erzeugen der verringerten Bitratendarstellung ferner ein Verwenden von weniger Bits pro Zeiteinheit umfasst, wenn die verfügbaren zeitsensitiven Sprachmedien paketiert werden.

11. Verfahren nach einem der Ansprüche 8-10, wobei das Erzeugen der verringerten Bitratendarstellung der verfügbaren zeitsensitiven Sprachmedien ein Verwenden von (a) einer oder mehreren unterschiedlichen Kodierungseinstellungen, (b) einer oder mehreren unterschiedlichen Kodierungen, (c) einem Kompressionsalgorithmus; oder (d) einer Kombination von (a) bis (c) umfasst, wenn die Medien für die Übertragung paketiert werden.

12. Verfahren nach einem der Ansprüche 8-11, wobei das Erzeugen der verringerten Bitratendarstellung der verfügbaren zeitsensitiven Sprachmedien ein Erhöhen des Paketierungsintervalls umfasst, welches verwendet wird, um die verfügbaren zeitsensitiven Sprachmedien zu übertragen.

13. Verfahren nach einem der Ansprüche 8-12, wobei das Erzeugen der verringerten Bitratendarstellung ferner ein Einstellen der Übertragungsrate umfasst, mit welcher Pakete, welche die verfügbaren zeitsensitiven Sprachmedien enthalten, übertragen werden.

14. Verfahren nach Anspruch 9, wobei das Erzeugen der verringerten Bitratendarstellung der verfügbaren zeitsensitiven Sprachmedien ferner ein Durchführen von einem oder mehreren der folgenden Schritte umfasst:
(i) Verwenden von weniger Bits pro Zeiteinheit bezogen auf die Vollbitratendarstellung, wenn die verringerte Bitratendarstellung der verfügbaren zeitsensitiven Sprachmedien paketiert wird,;
(ii) Erhöhen des Paketierungsintervalls, wenn die verfügbaren zeitsensitiven Sprachmedien übertragen werden;
(iii) Einstellen der Rate, mit welcher Pakete übertragen werden, welche die verfügbaren zeitsensitiven Sprachmedien enthalten; oder
(iv) eine beliebige Kombination von (i) bis (iii).

15. Verfahren nach Anspruch 8, ferner umfassend:
Definieren von aufeinanderfolgenden Übertragungsschleifen; und
Durchführen des Verfahrens der Ansprüche 8, 9 und 14, wie es für jede der aufeinanderfolgenden Übertragungsschleifen notwendig ist.

16. Verfahren nach einem der vorhergehenden Ansprüche, ferner umfassend:
(i) Führen eines Datenqualitätsspeichers;
(ii) Vermerken von beliebigen fehlenden, verfälschten oder verringerten Bitratenversionen der über die Netzwerkverbindung empfangenen Sprachmedien in dem Datenqualitätsspeicher; und
(iii) Übertragen von Anfragen für eine Wiederholungsübertragung von beliebigen Sprachmedien, welche in dem Datenqualitätsspeicher vermerkt sind, von der Kommunikationsvorrichtung über die Netzwerkverbindung.

17. Verfahren nach Anspruch 16, ferner umfassend:
(iv) Entfernen des Vermerks aus dem Datenqualitätsspeicher, wenn die Anfragen für eine wiederholungsübertragung zufriedengestellt wurden; und
(v) Wiederholen von (i) bis (iv), bis eine vollständige Kopie der über die Netzwerkverbindung empfangenen Sprachmedien empfangen und persistent gespeichert ist, wobei die vollständige Kopie eine Vollbitratendarstellung der Sprachmedien ist, wie sie ursprünglich kodiert wurden.

18. Verfahren nach einem der vorhergehenden Ansprüche, wobei der benutzbare Bereich der Netzwerkverbindung wirksam erweitert wird, wenn die bestimmte nutzbare Bitrate unter den Bitratenschwellenwert auf gerade oberhalb des Punkts, bevor die nutzbare Bitrate auf der Netzwerkverbindung auf Null reduziert wird, fällt.

19. Verfahren nach einem der vorhergehenden Ansprüche, ferner umfassend:
Bestimmen, wann die nutzbare Bitrate auf der Netzwerkverbindung auf Null reduziert wird;
persistentes Speichern von unter Verwendung der Kommunikationsvorrichtung erzeugten Sprachmedien, wenn die nutzbare Bitrate auf der Netzwerkverbindung auf Null reduziert ist;
Verzögern der Übertragung der unter Verwendung der Kommunikationsvorrichtung erzeugten Sprachmedien, wenn die nutzbare Bitrate auf der Netzwerkverbindung auf Null reduziert ist, und
Übertragen der Sprachmedien von dem persistenten Speicher nach der Verzögerung, während die nutzbare Bitrate auf der Netzwerkverbindung steigt.

20. Verfahren nach einem der vorhergehenden Ansprüche, ferner umfassend ein Definieren einer Konversation und Bestimmen der unter Verwendung der Kommunikationsvorrichtung erzeugten Sprachmedien und der über die Netzwerkverbindung empfangenen Sprachmedien, welche der Konversation zugeordnet sind.

21. Verfahren nach Anspruch 20, ferner umfassend ein persistentes Speichern der unter Verwendung der Kommunikationsvorrichtung erzeugten Sprachmedien und der über die Netzwerkverbindung empfangenen Sprachmedien, welche der Konversation zugeordnet sind, in einem zeitbasierten Format.

22. Verfahren nach Anspruch 21, wobei das Bereitstellen der Möglichkeit, die über die Netzwerkverbindung empfangenen Sprachmedien wiederzugeben, ferner ein Bereitstellen der Möglichkeit umfasst, die der Konversation zugeordneten Sprachmedien in einer zeitversetzten Betriebsart zu überprüfen, indem die Medien von dem persistenten Speicher abgefragt werden und die abgefragten Medien auf der Kommunikationsvorrichtung in dem zeitbasierten Format wiedergegeben werden.

23. Verfahren nach einem der vorhergehenden Ansprüche, wobei das Bereitstellen der Möglichkeit, die über die Netzwerkverbindung empfangenen Sprachmedien wiederzugeben, ferner ein Wiedergeben der Medien auf der Kommunikationsvorrichtung umfasst, wie sie über die Netzwerkverbindung in einer Echtzeitbetriebsart empfangen werden.

24. Verfahren nach einem der vorhergehenden Ansprüche, ferner umfassend ein persistentes Speichern der Vollbitratendarstellung der unter Verwendung der Kommunikationsvorrichtung erzeugten Medien und der über die Netzwerkverbindung an der Kommunikationsvorrichtung empfangenen Sprachmedien.

25. Verfahren nach einem der vorhergehenden Ansprüche, ferner umfassend ein persistentes Speichern der Vollbitratendarstellung der unter Verwendung der Kommunikationsvorrichtung erzeugten Medien und der über die Netzwerkverbindung empfangenen Sprachmedien auf dem Netzwerk an einer Stelle, welche von der Kommunikationsvorrichtung entfernt angeordnet ist.

26. Verfahren nach einem der vorhergehenden Ansprüche, wobei die Netzwerkverbindung eine drahtlose Netzwerkverbindung ist und sich die Übertragung der unter Verwendung der Kommunikationsvorrichtung erzeugten Sprachmedien von dem persistenten Speicher bei einer Bitrate, welche der nutzbaren Bitrate auf der drahtlosen Netzwerkverbindung entspricht, wirksam über sowohl den benutzbaren Bereich als auch eine Kapazität der drahtlosen Netzwerkverbindung erstreckt.

27. Verfahren nach einem der vorhergehenden Ansprüche, wobei die Netzwerkverbindung eine drahtgebundene Netzwerkverbindung ist und sich die Übertragung der unter Verwendung der Kommunikationsvorrichtung erzeugten Sprachmedien von dem persistenten Speicher bei einer Bitrate, welche der nutzbaren Bitrate auf der drahtgebundenen Netzwerkverbindung entspricht, wirksam über die nutzbare Kapazität der drahtgebundenen Netzwerkverbindung erstreckt.

28. Verfahren nach einem der vorhergehenden Ansprüche, wobei die Kommunikationsvorrichtung eines der folgenden umfasst:
ein Festnetzanschlusstelefon, ein drahtloses Telefon, ein zelluläres Telefon, ein Satellitentelefon, einen Computer,
ein Radio, einen Server, ein Satellitenradio, ein taktisches Radio oder ein taktisches Telefon.

29. Verfahren nach einem der vorhergehenden Ansprüche, ferner umfassend ein Übertragen und Empfangen von einer oder mehreren der folgenden Arten von Medien zusätzlich zu den Sprachmedien: Video, Text, Sensordaten, eine Position oder eine GPS-Information, Funksignale oder eine Kombination daraus.

30. Verfahren nach einem der vorhergehenden Ansprüche, wobei die unter Verwendung der Kommunikationsvorrichtung erzeugten Medien und die über die Netzwerkverbindung empfangenen Medien persistent auf der Kommunikationsvorrichtung gespeichert werden.

31. Verfahren nach einem der vorhergehenden Ansprüche, wobei die unter Verwendung der Kommunikationsvorrichtung erzeugten Medien und die über die Netzwerkverbindung empfangenen Medien persistent in dem Netzwerk gespeichert werden.

32. Kommunikationsvorrichtung (A, B) zum Erweitern des nutzbaren Bereichs und/oder einer Kapazität eines Netzwerks, wobei die Kommunikationsvorrichtung ausgestaltet ist, das Verfahren nach einem der Ansprüche 1-24 oder 26-30 auszuführen.

33. Computerlesbares Medium, welches einen Computerprogrammcode speichert, welcher von einer Verarbeitungseinheit ausführbar ist, um das Verfahren nach einem der Ansprüche 1-24 oder 26-30 auszuführen.

## Revendications

1. Procédé destiné à étendre la portée utilisable et/ou la capacité d'un réseau (12, 14), en vue d'une communication vocale sur un dispositif de communication (A, B), comprenant les étapes ci-dessous consistant à :
recevoir un média voix généré en utilisant le dispositif de communication (A, B), le dispositif de communication étant configuré de manière à être connecté à un réseau (12, 14) via une connexion de réseau entre le réseau et le dispositif de communication ;
coder le média voix pour générer une représentation de débit binaire total du média généré lors de l'utilisation du dispositif de communication ;
stocker de manière persistante la représentation de débit binaire total du média voix généré lors de l'utilisation du dispositif de communication,
le procédé étant **caractérisé en ce qu'**il comporte les étapes ci-dessous consistant à :
déterminer si le débit binaire utilisable sur la connexion de réseau passe sous un seuil de débit binaire, le seuil de débit binaire définissant un rendement de débit binaire minimum suffisant pour maintenir une communication en temps réel ;
transmettre le média voix généré en utilisant le dispositif de communication, à partir d'un stockage persistant, lorsque le débit binaire utilisable constaté est inférieur au seuil de débit binaire, le média voix étant transmis à un débit binaire correspondant au débit binaire utilisable sur la connexion de réseau, ce qui permet par conséquent d'étendre la portée utilisable et/ou la capacité de la connexion de réseau en vue d'une communication vocale lorsque le débit binaire utilisable constaté passe sous le seuil de débit binaire ;
recevoir le média voix sur la connexion de réseau ;
stocker de manière persistante le média voix reçu sur la connexion de réseau, et
offrir la capacité de restituer le média voix reçu sur la connexion de réseau lorsque le média voix reçu sur la connexion de réseau est suffisamment complet pour que celui-ci soit déchiffrable lors de sa restitution.

2. Procédé selon la revendication 1, dans lequel l'étape consistant à déterminer si le débit binaire utilisable sur la connexion de réseau passe sous le seuil de débit binaire comprend en outre les étapes ci-dessous consistant à :
recevoir un ou plusieurs rapports comprenant chacun une vitesse de transfert mesurée à laquelle les bits transmis sur la connexion de réseau parviennent en toute sécurité à un destinataire sur une période de temps prédéterminée ;
calculer le débit binaire utilisable sur la connexion de réseau sur la base dudit un ou desdits plusieurs rapports reçus ; et
comparer le débit binaire utilisable calculé au seuil de débit binaire.

3. Procédé selon l'une quelconque des revendications précédentes, dans lequel le rendement de débit binaire minimum suffisant pour maintenir une communication en temps réel est égal à au moins 80 % du rendement de débit binaire nécessaire en vue de transmettre et de décoder la représentation de débit binaire total du média voix avec le même débit que celui auquel le média voix a été codé à l'origine.

4. Procédé selon l'une quelconque des revendications précédentes, comprenant en outre les étapes ci-dessous consistant à :
déterminer à quel moment le débit binaire utilisable sur la connexion de réseau dépasse le seuil de débit binaire ; et
transmettre la représentation de débit binaire total du média voix généré en utilisant le dispositif de communication sans introduire de temps de latence lorsque le débit binaire utilisable constaté dépasse le seuil de débit binaire.

5. Procédé selon l'une quelconque des revendications précédentes, dans lequel l'étape consistant à transmettre la représentation de débit binaire total du média voix comprend en outre les étapes ci-dessous consistant à :
(i) définir une boucle de transmission ;
(ii) déterminer le média voix généré en utilisant le dispositif de communication disponible pour une transmission dans la boucle de transmission définie ; et
(iii) transmettre la représentation de débit binaire total du média voix disponible généré en utilisant le dispositif de communication au cours de la boucle de transmission.

6. Procédé selon la revendication 5, comprenant en outre les étapes consistant à définir les boucles de transmission successives et répéter les étapes (i) à (iii) pour chaque boucle.

7. Procédé selon l'une quelconque des revendications précédentes, dans lequel l'étape consistant à transmettre le média voix, généré en utilisant le dispositif de communication, à partir du stockage persistant comporte en outre l'étape consistant à modifier la quantité de latence lors de la transmission, selon la nécessité, de sorte que le débit binaire de transmission correspond au débit binaire utilisable sur la connexion de réseau lorsque le débit binaire utilisable constaté passe sous le seuil de débit binaire.

8. Procédé selon l'une quelconque des revendications précédentes, dans lequel l'étape consistant à transmettre le média voix, généré en utilisant le dispositif de communication, à partir du stockage persistant comprend en outre les étapes ci-dessous consistant à :
définir une boucle de transmission ;
déterminer si le débit binaire utilisable constaté n'est pas suffisant pour transmettre le média voix disponible dans la boucle de transmission définie ;
déterminer un média voix sensible au facteur temps parmi l'ensemble des médias voix disponibles prêt à une transmission, la sensibilité au facteur temps du média voix étant déterminée par l'intention d'un destinataire d'examiner le média voix lors de sa réception ;
transmettre uniquement le média voix sensible au facteur temps disponible lorsque le débit binaire utilisable constaté est suffisant pour ne transmettre que le média voix sensible au facteur temps disponible.

9. Procédé selon la revendication 8, comprenant en outre les étapes ci-dessous consistant à :
déterminer si le débit binaire utilisable constaté n'est pas suffisant pour ne transmettre que le média voix sensible au facteur temps disponible et, le cas échéant
générer une représentation de débit binaire réduit du média voix sensible au facteur temps disponible ;
transmettre la représentation de débit binaire réduit du média voix sensible au facteur temps disponible.

10. Procédé selon la revendication 8 ou 9, dans lequel l'étape consistant à générer une représentation de débit binaire réduit comprend en outre l'étape consistant à utiliser moins de bits par unité de temps lors de la mise en paquets du média voix sensible au facteur temps disponible.

11. Procédé selon l'une quelconque des revendications 8 à 10, dans lequel l'étape consistant à générer une représentation de débit binaire réduit du média voix sensible au facteur temps disponible consiste à utiliser (a) un ou plusieurs paramètres de codec différents, (b) un ou plusieurs codecs différents, (c) un algorithme de compression, ou (d) toute combinaison des choix (a) à (c), lors de la mise en paquets du média en vue d'une transmission.

12. Procédé selon l'une quelconque des revendications 8 à 11, dans lequel l'étape consistant à générer une représentation de débit binaire réduit du média voix sensible au facteur temps disponible comprend l'étape consistant à augmenter l'intervalle de mise en paquet utilisé pour transmettre le média voix sensible au facteur temps disponible.

13. Procédé selon l'une quelconque des revendications 8 à 12, dans lequel l'étape consistant à générer une représentation de débit binaire réduit comprend en outre l'étape consistant à ajuster la vitesse de transmission à laquelle les paquets contenant le média voix sensible au facteur temps disponible sont transmis.

14. Procédé selon la revendication 9, dans lequel l'étape consistant à générer la représentation de débit binaire réduit du média voix sensible au facteur temps disponible comprend en outre l'étape consistant à mettre en oeuvre l'une ou plusieurs des étapes ci-dessous consistant à :
(i) utiliser moins de bits par unité de temps lors de la mise en paquets de la représentation de débit binaire réduit du média voix sensible au facteur temps disponible, relativement à la représentation de débit binaire total;
(ii) augmenter l'intervalle de mise en paquet lors de la transmission du média voix sensible au facteur temps disponible ;
(iii) ajuster la vitesse à laquelle sont transmis les paquets contenant le média voix sensible au facteur temps disponible ; ou
(iv) toute combinaison des étapes (i) à (iii).

15. Procédé selon la revendication 8, comprenant en outre les étapes ci-dessous consistant à :
définir des boucles de transmission successives ; et
mettre en oeuvre le procédé selon les revendications 8, 9 et 14, selon la nécessité, pour chacune des boucles de transmission successives.

16. Procédé selon l'une quelconque des revendications précédentes, comprenant en outre les étapes ci-dessous consistant à :
(i) maintenir un magasin de stockage de la qualité des données ;
(ii) indiquer les versions de débit binaire manquantes, altérées ou réduites du média voix reçu sur la connexion de réseau dans le magasin de stockage de la qualité des données ; et
(iii) transmettre à partir du dispositif de communication sur la connexion de réseau, des demandes en vue d'une retransmission de tout média voix indiqué dans le magasin de stockage de la qualité des données.

17. Procédé selon la revendication 16, comprenant en outre les étapes ci-dessous consistant à :
(iv) supprimer l'indication du magasin de stockage de la qualité des données lorsque les demandes de retransmission sont satisfaites ;
(v) répéter les étapes (i) à (iv) jusqu'à ce qu'une copie complète du média voix reçu sur la connexion de réseau soit reçue et stockée de manière persistante, dans laquelle la copie complète est une représentation de débit binaire total du média voix tel que celui-ci a été codé à l'origine.

18. Procédé selon l'une quelconque des revendications précédentes, dans lequel la portée utilisable de la connexion de réseau est efficacement étendue lorsque le débit binaire utilisable constaté passe de sous le seuil de débit binaire à juste au-dessus du point avant lequel le débit binaire utilisable sur la connexion de réseau devient nul.

19. Procédé selon l'une quelconque des revendications précédentes, comprenant en outre les étapes ci-dessous consistant à :
déterminer à quel moment le débit binaire utilisable sur la connexion de réseau devient nul ;
stocker de manière persistante le média voix généré en utilisant le dispositif de communication lorsque le débit binaire utilisable sur la connexion de réseau devient nul ;
retarder la transmission du média voix généré en utilisant le dispositif de communication lorsque le débit binaire utilisable sur la connexion de réseau devient nul ; et
transmettre le média voix à partir du stockage persistant dès lors qu'augmente le retard en tant que débit binaire utilisable sur la connexion de réseau.

20. Procédé selon l'une quelconque des revendications précédentes, comprenant en outre les étapes consistant à définir une conversation, et déterminer le média voix généré en utilisant le dispositif de communication et le média voix reçu sur la connexion de réseau associée à la conversation.

21. Procédé selon la revendication 20, comprenant en outre l'étape consistant à stocker de manière persistante le média voix généré en utilisant le dispositif de communication et le média voix reçu sur la connexion de réseau associée à la conversation sous la forme d'un format temporel.

22. Procédé selon la revendication 21, dans lequel l'étape consistant à offrir la possibilité de restituer le média voix reçu sur la connexion de réseau comprend en outre l'étape consistant à offrir la possibilité d'examiner le média voix associée à la conversation dans un mode décalé dans le temps en récupérant le média à partir du stockage persistant et en restituant le média récupéré sur le dispositif de communication dans un format temporel.

23. Procédé selon l'une quelconque des revendications précédentes, dans lequel l'étape consistant à offrir la possibilité de restituer le média voix reçu sur la connexion de réseau comprend en outre l'étape consistant à restituer le média sur le dispositif de communication tel qu'il est reçu sur la connexion de réseau dans un mode temps réel.

24. Procédé selon l'une quelconque des revendications précédentes, comprenant en outre l'étape consistant à stocker de manière persistante la représentation de débit binaire total du média généré en utilisant le dispositif de communication et le média voix reçu sur la connexion de réseau au niveau du dispositif de communication.

25. Procédé selon l'une quelconque des revendications précédentes, comprenant en outre l'étape consistant à stocker de manière persistante la représentation de débit binaire total du média généré en utilisant le dispositif de communication et le média voix reçu sur la connexion de réseau sur le réseau à un emplacement distant du dispositif de communication.

26. Procédé selon l'une quelconque des revendications précédentes, dans lequel la connexion de réseau est une connexion de réseau sans fil et l'étape de transmission du média voix généré en utilisant le dispositif de communication à partir du stockage persistant, à un débit binaire qui correspond au débit binaire utilisable sur la connexion de réseau sans fil, étend efficacement la portée utilisable et la capacité de la connexion de réseau sans fil.

27. Procédé selon l'une quelconque des revendications précédentes, dans lequel la connexion de réseau est une connexion de réseau filaire et l'étape de transmission du média voix généré en utilisant le dispositif de communication à partir du stockage persistant, à un débit binaire qui correspond au débit binaire utilisable sur la connexion de réseau filaire, étend efficacement la portée utilisable et la capacité de la connexion de réseau filaire.

28. Procédé selon l'une quelconque des revendications précédentes, dans lequel le dispositif de communication comprend l'un des éléments ci-après: un téléphone filaire, un téléphone sans fil, un téléphone cellulaire, un téléphone par satellite, un ordinateur, un dispositif radio, un serveur, un dispositif radio par satellite, un dispositif radio tactique ou un téléphone tactique.

29. Procédé selon l'une quelconque des revendications précédentes, comprenant en outre l'étape consistant à transmettre et recevoir, en plus du média voix, un ou plusieurs des types de médias suivants : de la vidéo, du texte, des données de capteur, des informations GPS ou de positionnement, des signaux radio, ou une combinaison de ces médias.

30. Procédé selon l'une quelconque des revendications précédentes, dans lequel le média généré en utilisant le dispositif de communication et le média reçu sur la connexion de réseau sont stockés de manière persistante sur le dispositif de communication.

31. Procédé selon l'une quelconque des revendications précédentes, dans lequel le média généré en utilisant le dispositif de communication et le média reçu sur la connexion de réseau sont stockés de manière persistante sur le réseau.

32. Dispositif de communication (A, B) destiné à étendre la portée utilisable et/ou la capacité d'un réseau, dans lequel le dispositif de communication est configuré de manière à mettre en oeuvre le procédé selon l'une quelconque des revendications 1 à 24 ou 26 à 30.

33. Support lisible par un ordinateur stockant un code de programme informatique exécutable par une unité de traitement en vue de mettre en oeuvre le procédé selon l'une quelconque des revendications 1 à 24 ou 26 à 30.
